# EUROPEAN PATENT SPECIFICATION

(11) **EP 2 490 113 B1**
(45) Date of publication and mention of the grant of the patent: **23.11.2016**
(21) Application number: 12000789.3
(22) Date of filing: 07.02.2012
(51) Int. Cl.: G06F 3/0482, G06F 3/0488

(54) **Display device and method of controlling operation thereof**
Anzeigevorrichtung und Verfahren zur Steuerung des Betriebs davon
Procédé d'affichage et procédé de contrôle de son fonctionnement

(30) Priority: 15.02.2011 US 201161442810 P; 18.07.2011 KR 20110071049
(43) Date of publication of application: 22.08.2012
(73) Proprietor: LG ELECTRONICS INC., Yeongdeungpo-gu Seoul 150-721 (KR)
(72) Inventor: Park, Jongsoon, Seocho-gu Seoul (KR); Therat Sethumadavan, Bipin, Seocho-gu Seoul (KR); Challagali, Samavarthy, Seocho-gu Seoul (KR); Park, Junsoo, Seocho-gu Seoul (KR); Patalappa, Kiran, Seocho-gu Seoul (KR)
(74) Representative: Gunzelmann, Rainer

(56) References cited:
- US-A1- 2007 247 435
- US-A1- 2008 074 399

## Description

### CROSS-REFERENCE TO RELATED APPLICATIONS

The present application claims priority to Korean Patent Application No. 11-2011-0071049 (filed on 18 July 2011) and US Provisional Patent Application No. 61/442810 (filed on 15 February 2011).

### FIELD

The present disclosure relates to a method which controls an operation of a display device according to a user input.

### BACKGROUND

Recently, digital television (TV) services using a wired or wireless communication network are becoming more common. Digital TV services provide various services that cannot be provided by the existing analog broadcast service.

For example, as a type of digital TV service, an Internet Protocol Television (IPTV) service provides interactivity that enables a user to actively select the kind of program for viewing, a viewing time, etc. The IPTV service provides various additional services, including, for example, Internet search, home shopping, and online games based on interactivity.

US 2008/0074399 A1 relates to a mobile communication terminal and a method of selecting menus and items thereon. When a user selects a main menu, a controller displays a plurality of corresponding sub-menus around the main menu. The user can then drag his or her finger from the main menu in a direction of a sub-menu. The controller senses the dragging of the finger in this direction and executes the operation corresponding to the sub-menu. Thus, to select the sub-menu, the user first touches the main menu and then drags their finger in the direction to the sub-menu.

US 2007/0247435 A1 relates to pixel-accurate targeting with respect to multi-touch sensitive displays when selecting or viewing content with a cursor. In a dual finger touch input, a secondary finger triggers a change in cursor position from its original position. The cursor is offset to the midpoint between a primary and the secondary fingers. While those fingers are in contact with the screen, moving either or both fingers controls the movement of the cursor.

It is an object of the present invention to provide a display device and method of controlling an operation of such a display device in a very user-convenient and efficient manner. This object is solved by the present invention as claimed in the independent claims. Preferred embodiments are defined by the dependent claims.

### SUMMARY

According to an aspect of the present invention, a method of controlling an operation of a display device is defined in claim 1.

According to another aspect of the present invention, a display device is defined in claim 9.

In accordance with yet another aspect of the present invention, the method of controlling the operation of the display device may be implemented with a computer-readable storage medium storing a program for executing in a computer.

According to still another aspect of the present invention, a program for executing the method of controlling the operation of the display device may be stored and installed in the display device.

The details of one or more embodiments are set forth in the accompanying drawings and the description below. Other features will be apparent from the description and drawings, and from the claims.

### BRIEF DESCRIPTION OF THE DRAWINGS

Fig. 1 is a block diagram illustrating a configuration of a display device.
Fig. 2 is a flowchart illustrating a method of controlling an operation of a display device.
Fig. 3 is a view illustrating a screen configuration of a display device.
Fig. 4 is a view illustrating a method that displays selectable menu items for an object.
Figs. 5 and 6 are views illustrating a method that selects a menu item to be executed for an object.
Fig. 7 is a view illustrating a method that selects a menu item according to two points selected by a user.
Fig. 8 is a view illustrating a method that changes a menu item.
Figs. 9 to 17 are views respectively illustrating a method that displays menu items according to an attribute of an object.
Fig. 18 is a view illustrating a method that creates a content group.
Fig. 19 is another view illustrating a method that creates a content group.
Figs. 20 to 23 are views respectively illustrating a method that manages a content group.
Figs. 24 and 25 are views respectively illustrating a method that enlarges an object to perform a preview.
Fig. 26 is a view illustrating a method that separates and creates a portion of an object into discrete content.
Fig. 27 is a view illustrating a method that transmits scrap content created by the method of Fig. 26.
Fig. 28 is a view illustrating a method that inputs characters to an object displayed on a screen.
Fig. 29 is a view illustrating a method that creates an object enabling the input of a memo.
Fig. 30 is a view illustrating a method that aligns objects displayed on a screen.

### DETAILED DESCRIPTION OF THE EMBODIMENTS

Hereinafter, a display device and methods of controlling operation thereof will be described in detail with reference to the accompanying drawings.

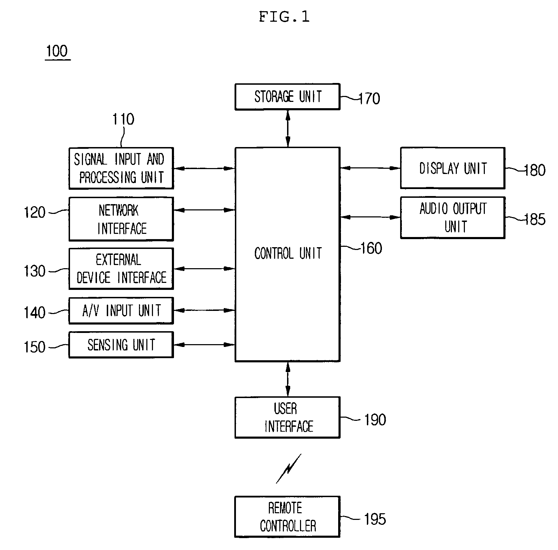

Fig. 1 is a block diagram illustrating a configuration of a display device.

Referring to Fig. 1, a display device 100 may include a signal input and processing unit 110, a network interface 120, an external device interface 130, an A/V input unit 140, a sensing unit 150, a control unit 160, a storage unit 170, a display unit 180, an audio output unit 185, and a user interface 190.

The display device 100 may be an image display device such as a television (TV), a monitor, a notebook computer, or a tablet Personal Computer (PC) that may be connected to a mobile terminal over a wireless network.

For example, the display device 100 may be a network TV, an Internet Protocol TV (IPTV), a Hybrid Broadcast Broadband TV (HBBTV), or a smart TV that may perform various user-friendly functions as various applications are freely added or deleted to/from a general Operating System (OS) Kernel.

For example, the display device 100 may be one of various devices that output images and sound, such as a portable phone, a smart phone, a tablet PC, a digital broadcasting terminal, a Personal Digital Assistant (PDA), a Portable Multimedia Player (PMP), an Internet phone such as SoIP, a navigation device, or an MP3 player.

The display device 100 may be connected to an external device to transmit/receive data in one of various wireless communication schemes such as Wireless LAN (WiFi), WiFi direct, WiFi display, Blutooth, ZigBee, binary Code Division Multiple Access (CDMA), Wireless broadband (Wibro), World Interoperability for Microwave Access (Wimax), High Speed Downlink Packet Access (HSDPA), Universal Plug and Play (UPnP)/Digital Living Network Alliance (DLBNA), Ultra wide band (UWB)/wireless Universal Serial Bus (USB).

In some implementations, the display device 100 may transmit/receive content to/from an external device in one of the above-described wireless communication schemes, and search contents stored in the display device 100 or the external device that is connected to a content server over the Internet, according to search words inputted by a user.

The content may be real-time broadcast, a movie, music, a photograph, a document file, Content On Demand (COD), a game, news, video call, an application, or the like.

Referring again to Fig. 1, the signal input and processing unit 110 receives and processes a signal from the outside. For example, the signal input and processing unit 110 may select a Radio Frequency (RF) broadcast signal, corresponding to a channel selected by the user or all pre-stored channels, from among a plurality of RF broadcast signals received through an antenna to receive the selected RF broadcast channel.

The network interface 120 may provide an interface for connecting the display device 100 to a wired/wireless network, and transmit/receive data to/from an external device in various wireless communication schemes that have been described above with reference to Fig. 1.

For example, the network interface 120 may establish a wireless network connection with the mobile terminal according to a communication standard such as WiFi or Bluetooth, and transmit/receive content data and information for data communication to/from the mobile terminal over the connected network.

Moreover, the network interface 120 may include an Ethernet terminal for accessing the Internet, and access a webpage through the Ethernet terminal to receive content, provided from a specific content provider or a network provider, such as a movie, an advertisement, a game, VOD, a broadcast signal, or the like.

The external device interface 130 may connect an external device and the display unit 180, for example, access an external device such as a Digital Versatile Disk (DVD), Blu-ray, a game machine, a camera, a camcorder, or a computer (for example, a notebook computer) in a wireless way or a wired way.

In order for the display unit 180 to receive a video signal and an audio signal from an external device, the A/V input unit 140 may include a Composite Video Banking Sync (CVBS) terminal, a component terminal, an S-video terminal (analog), a Digital Visual Interface (DVI) terminal, a High Definition Multimedia Interface (HDMI) terminal, RGB terminals, and a D-SUB terminal.

The A/V input unit 140 may include a camera or a microphone and acquire data corresponding to an image or voice of a user. The acquired data may be delivered to the control unit 160.

The sensing unit 150 may include various sensors such as a touch sensor, a magnetometer, an accelerometer, a proximity sensor, a gyroscope sensor, an ambient light sensor, a colorimeter, and a tag, for sensing the current state of the display device 100.

The control unit 160 controls an overall operation of the display device 100. The control unit 160 may demultiplex a data stream that is inputted through the signal input and processing unit 110, the network interface 120, or the external device interface 130, and process the demultiplexed signals, thereby generating and outputting a signal for output of video or audio.

The storage unit 170 may store a program for the signal processing and control of the control unit 160, and store the signal-processed video, audio, or data signal.

Moreover, the storage unit 170 may temporarily store a video, audio, or data signal that is inputted from the external device interface 130 or the network interface 120, or store information regarding a predetermined broadcast channel with a channel storage function.

The storage unit 170 may store an application or an application list that is inputted from the external device interface 130 or the network interface 120.

The storage unit 170, for example, may include at least one storage medium of a flash memory, a hard disk, a micro MultiMediaCard (MMC) type of memory, a card type of memory (for example, an SD or XD memory, etc.), a Random Access Memory (RAM), and a Read Only Memory (ROM, for example, Electrically Erasable and Programmable Read Only Memory (EEPROM), etc.).

The display device 100 may provide content data (for example, a moving image file, a still image file, a music file, a document file, an application file, or the like) stored in the storage unit 170 to a user by displaying the content data.

The user interface 190 delivers a signal inputted by the user to the control unit 160, or delivers a signal, inputted from the control unit 160, to the user.

For example, the user interface 190 may receive a control signal or a user input signal such as power-on/off, selection of a channel, or setting of a screen from a remote controller 195 in one of various communication schemes such as Bluetooth, Radio Frequency Identification (RFID), Infrared Data Association (IrDA), Ultra Wideband (UWB), Zigbee, and Digital Living Network Alliance (DLNA) and process the received signal. Alternatively, the user interface 190 may process the control signal from the control unit 160 in order for the control signal to be transmitted to the remote controller 195.

The control unit 160 may control the display unit 180 so as to display an image. For example, the control unit 160 may perform control such that the display unit 180 displays a broadcast image inputted through the signal input and processing unit 110, an external input image inputted through the external device interface 130, an image inputted through the network interface 120, or an image stored in the storage unit 170. An image displayed by the display unit 180 may be a still image or a moving image, and be a Two-Dimensional (2D) image or a Three-Dimensional (3D) image.

The display unit 180 may include a screen portion positioned such that it is exposed to a surface of the display device 100 for displaying an image.

The display unit 180 converts an image signal, a data signal, and an On Screen Display (OSD) signal that have been processed by the control unit 160 into RGB signals to generate a driving signal. Alternatively, the display unit 180 converts an image signal and a data signal, which are received through the external device interface 130, into RGB signals to generate a driving signal.

The display unit 180 may display an image utilizing one of various display types, such as Plasma Display Panel (PDP), Liquid Crystal Display (LCD), Organic Light Emitting Diode (OLED), flexible display, and 3D display. The display unit 180 may be configured with a touch screen and used as an input device as well as an output device.

The audio output unit 185 receives a signal (for example, a stereo signal, a 3.1 channel signal or a 5.1 channel signal) audio-processed by the control unit 160 to output audio.

The configuration of the display device according to one implementation has been described above with reference to Fig. 1, but the present invention is not limited thereto. As another example, the elements of Fig. 1 may be partially integrated or omitted, or other elements may be added, according to the main function or specification of a display device.

In some implementations, the display device 100, having the above-described configuration of Fig. 1, may display a plurality of objects. When a first point inside any one of the objects is selected, the display device 100 may display a plurality of menu items selectable for the object. When a second point outside the object is selected in a state where the first point has been selected, the display device 100 may execute a menu item, selected according to a location of the second point, for the object.

As a user moves the location of the second point, a menu item selected from among the displayed menu items is changed, and thus, the user can easily select a menu item, which is intended to be executed for a specific object displayed on a screen, through one connected motion.

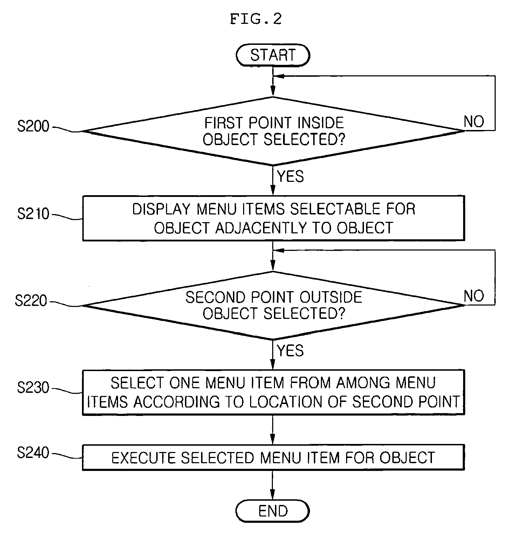

Hereinafter, various implementations of a method of controlling an operation of a display device will be described in detail with reference to Figs. 2 to 16.

Fig. 2 is a flowchart illustrating a method of controlling an operation of a display device. The operation control method will be described below by applying the block diagram of Fig. 1 that illustrates the configuration of the display device. However, the operation control method could be applied to any suitably configured display device.

Referring to Fig. 2, the control unit 160 of the display device 100 may check whether a first point inside an object displayed on a screen is selected in operation S200. When the first point inside the object is selected, the control unit 160 displays a plurality of menu items selectable for the object so as to be adjacent to a corresponding object, on the screen in operation S210.

For example, each of the objects is a Graphic User Interface (GUI) element for displaying a specific function on the screen, and may be freely placed on the screen according to a user input.

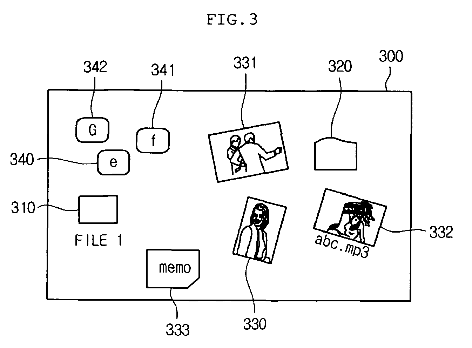

Referring to Fig. 3, a plurality of objects 310, 320 and 330 to 333 may be displayed on a screen 300 of the display device 100. The plurality of objects 310, 320, 330, and 333 may represent accessible content, files, content groups, file groups, folders, applications, or the like.

Each of the objects may be displayed on the screen 300 as an identifiable icon type of image, such as a thumbnail image, indicating pertinent function or content.

For example, the user may select a file object 310 to open a file corresponding to a pertinent object, and move a display location of the file object 310 to an arbitrary location of the screen 300.

More specifically, when the display unit 180 is configured with a touch screen and serves as a user input means, the user may select a specific object or drag and move the selected object in a desired direction with a tool such as a finger.

Alternatively, the user may move a display location of a specific object with a key button included in the remote controller 195, or move the display location of the specific object with the remote controller 195 having a motion recognizing function.

Moreover, the folder object 320 may include a plurality of contents such as photographs, moving images, and music. The user may select the folder object 320 to check a plurality of contents included in a corresponding folder or files respectively corresponding to the contents, and then select and replay desired content.

Contents stored in the display device 100, for example, thumbnail image types of content objects 330, 331, 332, and 333 respectively corresponding to a photograph, a moving image, a music file, and a memo may be displayed on the screen 300 of the display device 100.

Moreover, the application objects 340, 341, and 342 that respectively indicate various applications, such as search, messenger, news, mail, Social Network Service (SNS), may be displayed on the screen 300.

For example, a web browser object 340 is a program enabling the use of web (www) service and may provide that the capability to receive and show a hypertext described with hypertext markup language (HTML. An SNS application object 341 may provide SNS service that enables the forming of an online relationship with an unspecific user. Also, a search application object 342 may provide a search function for contents provided over Internet.

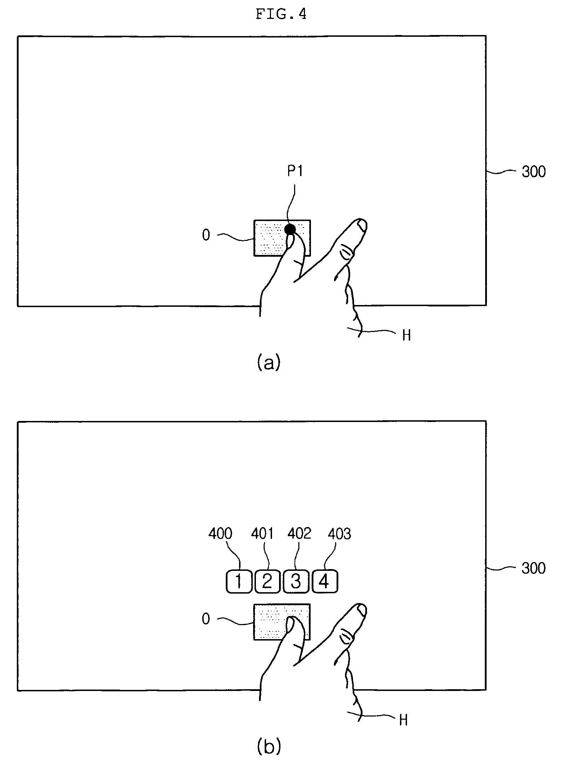

Referring to Fig. 4, when the user selects a first point P1 inside an object O displayed on a screen 300, menu items 400 to 403 selectable for the object O may be displayed adjacently to a corresponding object O.

As illustrated in a portion (a) of Fig. 4, the user may touch the first point P1 inside the object O for a predetermined time (for example, one second) or longer, with any one (for example, a thumb) of her fingers.

In this case, as referring to a portion (b) of Fig. 4, four menu items 400 to 403 selectable for a corresponding object O may be displayed adjacent to the object O.

The number or configuration of menu items displayed by selecting the first point P1 inside the object O may vary according to an attribute of a corresponding object.

Subsequently, the control unit 160 of the display device 100 checks whether a second point outside the object is selected in operation S220. When the second point is selected, the control unit 160 selects one of the menu items according to a location of the second point in operation S230, and executes the selected menu item for the object in operation S240.

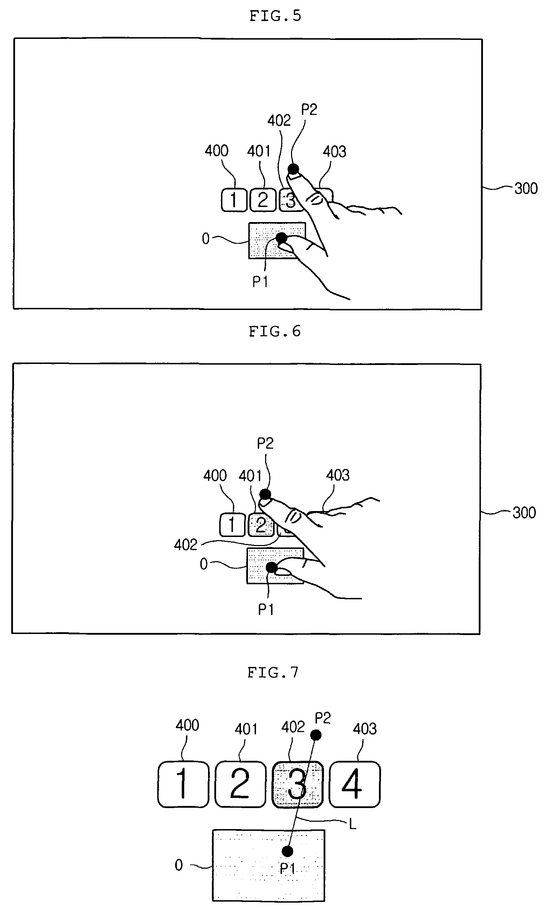

Referring to Fig. 5, when the user selects a second point P2 outside an object O in a state where the user has selected a first point P1 inside the object O, one of a plurality of menu items 400 to 403 may be selected to correspond to a location of the second point P2.

For example, when the user touches the first point P1 inside the object O for a certain time or longer with a thumb to display the menu items 400 to 403 on a screen 300, the user may touch the second point P2 on the screen 300 with an index finger resulting in one of the menu items 400 to 403 being placed between the first and second points P1 and P2 and thus selecting the menu item.

Among the menu items 400 to 403 displayed on the screen 300, the menu item 402 selected according to a location of the second point P2 may be highlighted or displayed in different colors so as to be differentiated from the other menu items 400, 401 and 403.

In some implementations, the user may move the location of the second point P2 by moving the index finger touched on the screen 300, and as the location of the second point P2 is moved, the selected menu item may be changed.

That is, a third menu item 402 may be selected from among a plurality of menu items 400 to 403 according to a location of a second point P2 in Fig. 5, and as illustrated in Fig. 6, when the user leftward moves an index finger touched on a screen 300 in a state where the user has fixed a thumb to a first point P1, the selected menu item may be changed to the second menu item 401 so as to correspond to the moved direction.

A specific menu item may be selected by the method that has been described above with reference to Figs. 5 and 6, and thereafter when the user detaches a touched finger from the second point P2 to release the selection of the second point P2, a menu item that has been selected at the release time may be executed for a corresponding object O.

In Fig. 6, for example, in a state where the user has touched and fixed a thumb to the first point P1, the user moves the location of the second point P2 by moving an index finger to select a menu item to be executed for the object O, and then when the second menu item 401 being a desired menu item is selected, the user may detach the touched index finger from the screen 300 and thus allow the second menu item 401 to be executed for the object O.

Fig. 7 is a view illustrating a method which selects a menu item according to two points P1 and P2 selected by a user.

Referring to Fig. 7, a menu item, which is selected from among a plurality of menu items 401 to 403 displayed on a screen 300, may be a menu item placed on a line L that connects the first and second points P1 and P2 selected by the user.

For example, when there is a virtual line L that connects the first point P1, touched by the user's thumb, inside the object O and the second point P2, touched by the user's index finger, outside the object O, the menu item 402 placed on the line L may be selected from among the menu items 401 to 403.

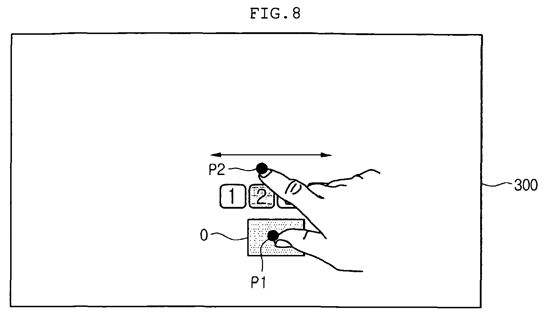

As illustrated in Fig. 8, in a state where the user has touched a thumb to a first point P1 inside an object O, when the user moves left and right an index finger touched to a second point P2, a menu item selected from among a plurality of menu items 401 to 403 may be changed left and right so as to correspond to the movement direction, and thus, the user can easily select a desired menu item from among the menu items 401 to 403.

In the above description, a case where the user selects the first point P1 inside the object and the second point P2 outside the object with the two fingers (for example, the thumb and the index finger) has been described above with reference to Figs. 4 to 8 as an example of the control method according to certain implementations, but the control method is not limited thereto.

For example, the user may select the first and second points P1 and P2 with various tools touchable to the screen 300 instead of fingers, or may select the first and second points P1 and P2 in various methods instead of a method of touching the screen 300.

According to some implementations, a plurality of menu items displayed adjacently to an object may be differently configured according to an attribute of a corresponding object.

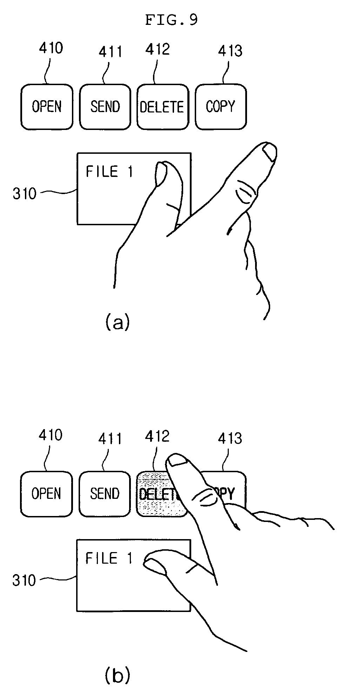

Figs. 9 to 16 illustrate various implementations of a method which displays menu items according to an attribute of an object.

Referring to Fig. 9, when a file object 310 indicating a specific file is selected, a menu item "Open" 410, a menu item "Send" 411, a menu item "Delete" 412, and a menu item "Copy" 413 may be displayed adjacently to the file object 310.

For example, as illustrated in a portion (a) of Fig. 9, when the user has touched a first point inside the file object 310 indicating a file 1 for a certain time or longer with a thumb, the four menu items 410 to 413 that enable the performing of opening, sending, deleting, and copying functions for the file 1 may be displayed adjacent to the file object 310.

Subsequently, as illustrated in a portion (b) of Fig. 9, when the user touches the outside of the file object 310, more particularly, a second point over the menu items 410 to 413 with an index finger in a state where the user has fixed the thumb to inside the file object 310, the menu item "Delete" 412 corresponding to the second point may be selected.

When the user moves the touched index finger to move a location of the second point, a menu item selected in correspondence with the movement direction of the second point may be changed.

When the user detaches the touched index finger in a state where one of the menu items 410 to 413 has been selected, for example, the menu item "Delete" 412 may be executed for the file object 310, and thus, the file 1 may be deleted from the storage unit 170 of the display device 100.

The number or configuration of menu items that have been described above with reference to Fig. 9 may vary according to an attribute of an object selected by the user, for example, the kind of content indicated by a corresponding object.

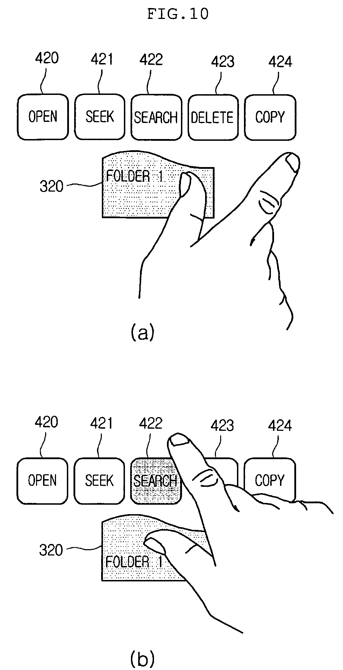

Referring to Fig. 10, when a folder object 320 indicating a specific folder including a plurality of files or contents is selected, a menu item "Open" 420, a menu item "Seek" 421, a menu item "Search" 422, a menu item "Delete" 423, and a menu item "Copy" 424 may be displayed adjacently to the folder object 320.

For example, as illustrated in a portion (a) of Fig. 10, when the user has touched a first point inside the folder object 320 indicating a folder 1 for a certain time or longer with a thumb, the five menu items 420 to 424 that enable the performing of opening, seeking, searching, deleting, and copying functions for the file 1 may be displayed adjacent to the folder object 320.

Subsequently, as illustrated in a portion (b) of Fig. 10, when the user touches the outside of the folder object 320, more particularly, a second point over the menu items 420 to 424 with an index finger in a state where the user has fixed the thumb to inside the folder object 320, the menu item "Search" 422 corresponding to the second point may be selected.

When the user detaches the touched index finger in a state where the menu item "Search" 422 among the menu items 420 to 424 has been selected, the selected menu item "Search" 422 may be executed for the folder object 320, and thus, search based on search words inputted by the user may be performed in the folder 1, namely, for files (for example, contents) included in the folder 1.

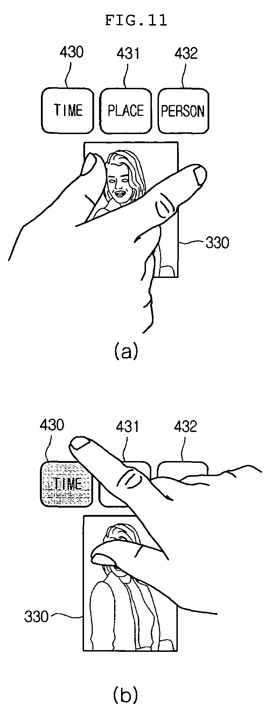

Referring to Fig. 11, when a photograph object 330 indicating a specific photograph is selected, a menu item "Time" 430, a menu item "Place" 431, and a menu item "Person" 432 may be displayed adjacently to the photograph object 330.

For example, as illustrated in a portion (a) of Fig. 11, when the user has touched a first point inside the photograph object 310 for a certain time or longer with a thumb, the three menu items 430 to 432 that respectively allow time, place, and person information associated with a corresponding photograph to be displayed may be displayed adjacent to the photograph object 330.

Subsequently, as illustrated in a portion (b) of Fig. 11, when the user touches the outside of the photograph object 330, more particularly, a second point over the menu items 430 to 432 with an index finger in a state where the user has fixed the thumb to inside the photograph object 330, the menu item "Time" 430 corresponding to the second point may be selected.

When the user detaches the touched index finger in a state where the menu item "Time" 430 among the menu items 430 to 432 has been selected, the selected menu item "Time" 430 may be executed for the photograph object 330, and thus, information regarding a time when corresponding photograph content has been created may be displayed on a screen 300.

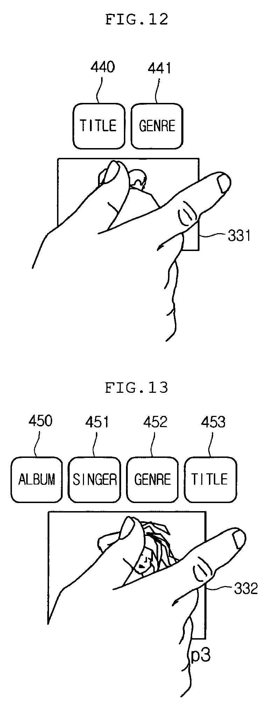

Referring to Fig. 12, when the user has touched a first point inside a moving image object 331 indicating a specific moving image for a certain time or longer with a thumb, two menu items 440 and 441 that respectively allow title and genre information associated with a pertinent moving image to be displayed may be displayed adjacent to the moving image object 331.

Referring to Fig. 13, when the user has touched a first point inside a music object 332 indicating specific music for a certain time or longer with a thumb, four menu items 450 to 453 that respectively allow album, singer, genre, and title information associated with corresponding music to be displayed may be displayed adjacent to the music object 332.

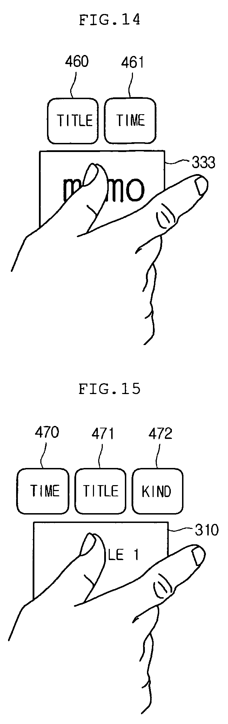

Referring to Fig. 14, when the user has touched a first point inside a memo object 333 indicating a specific memo for a certain time or longer with a thumb, two menu items 460 and 461 that respectively allow title and time information associated with a corresponding memo to be displayed may be displayed adjacent to the memo object 333.

Referring to Fig. 15, when a file object 310 indicating a file 1 is selected, unlike the above-described in Fig. 9, menu items 470 to 472 for respectively displaying time, title, and kind that are attributes of the file 1 may be displayed adjacently to the file object 310.

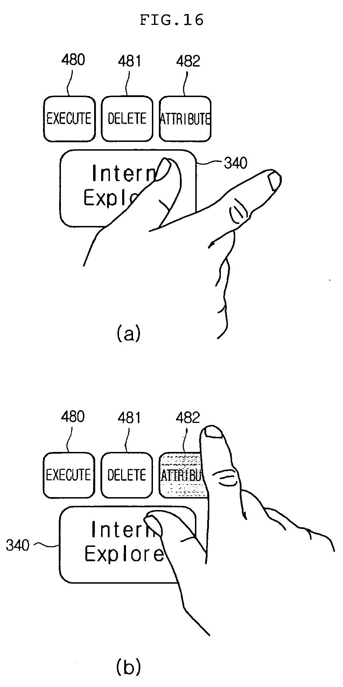

Referring to Fig. 16, when an application object 340 indicating a specific application is selected, a menu item "Execute" 480, a menu item "Delete" 481, and a menu item "Attribute" 482 may be displayed adjacently to the application object 340.

For example, as illustrated in a portion (a) of Fig. 16, when the user has touched a first point inside the application object 340 for web browsing for a certain time or longer with a thumb, the three menu items 480 to 482 that respectively allow executing, deleting, and attribute functions to be performed for a corresponding application may be displayed adjacent to the application object 340.

Subsequently, as illustrated in a portion (b) of Fig. 16, when the user touches the outside of the application object 340, more particularly, a second point over the menu items 480 to 482 with an index finger in a state where the user has fixed the thumb to inside the application object 340, the menu item "Attribute" 482 corresponding to the second point may be selected.

When the user detaches the touched index finger in a state where the menu item "Attribute" 482 among the menu items 480 to 482 has been selected, the selected menu item "Attribute" 482 may be executed for the application object 340, and thus, attribute information regarding a corresponding application for web browsing may be displayed on a screen 300.

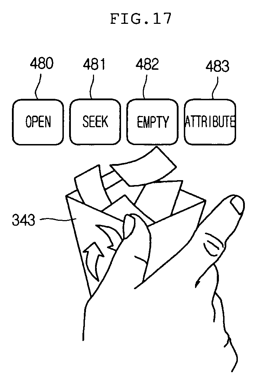

Referring to an example in Fig. 17, when the user has touched a first point inside a recycle bin object 343 indicating a recycle bin application for deleting and keeping a specific object during a certain time or longer with a thumb, four menu items 480 to 483 that respectively correspond to opening, seeking, emptying, and attribute functions selectable for a corresponding object 343 may be displayed over the recycle bin object 343.

According to other illustrative examples, the above-described objects, for example, a plurality of contents or files may be grouped into one or more groups and managed.

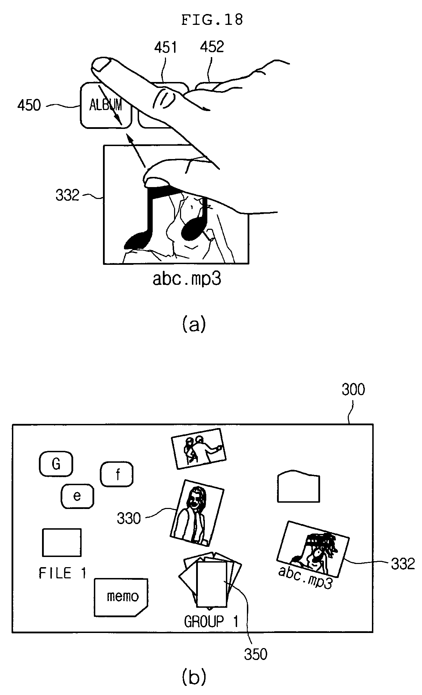

Fig. 18 illustrates a first example of a method which creates a content group.

Referring to Fig. 18, the user touches a first point inside a specific object displayed on a screen 300 and a second point outside the specific object with two fingers to select one of menu items selectable for a corresponding object, and thereafter, when the user makes a motion that gathers the two touched fingers, contents associated with the selected menu item may be created as one group.

For example, as illustrated in a portion (a) of Fig. 18, when the user has touched a first point inside a music object 332 for a certain time or longer with a thumb and a plurality of menu items 450 to 453 are displayed, the user may touch a second point outside the music object 332 to select an album menu item 450 with an index finger.

Subsequently, when the user detaches the index finger touched to the second point, album information regarding music content "abc.mp3" may be displayed on a screen 300.

When the user makes a motion that gathers the thumb and index finger respectively touched to the first and second points, as illustrated in a portion (b) of Fig. 18, contents included in the same album including the music content "abc.mp3" may be created as a group 1, and thus, a group object 350 corresponding to the created group 1 may be displayed on the screen 300.

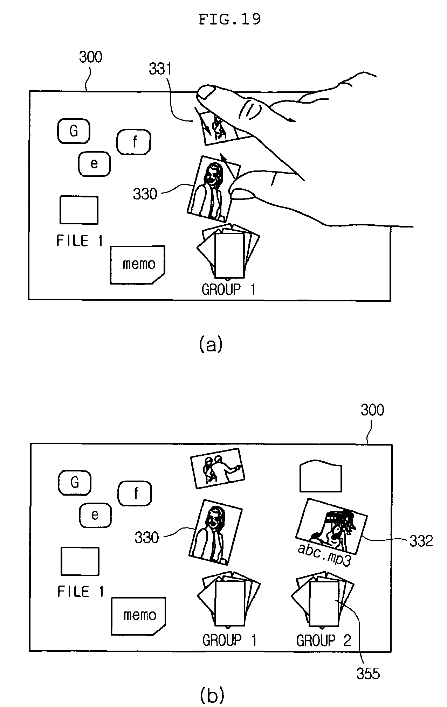

Referring to Fig. 19, the user touches and selects two objects displayed on a screen 300 with fingers, and then, by making a motion that gathers the touched fingers, the selected objects may be created as one group.

For example, as illustrated in a portion (a) of Fig. 19, the user touches a first point inside a photograph object 330 with a thumb and touches a second point inside a moving image object 331 with an index finger, thereby selecting a corresponding object.

Subsequently, when the user makes a motion that gathers the thumb and index finger respectively touched to the first and second points, as illustrated in a portion (b) of Fig. 19, photograph content indicated by the photograph object 330 and moving image content indicated by the moving image object 331 may be created as a group 2, and a group object 355 corresponding to the created group 2 may be displayed on the screen 300.

That is, the above-described group may be configured to include the same kind of contents, or configured to include different kinds of contents.

In the above description, various examples of a method that creates a group including a plurality of files or contents have been described with reference to Figs. 18 and 19, but the method is not limited thereto.

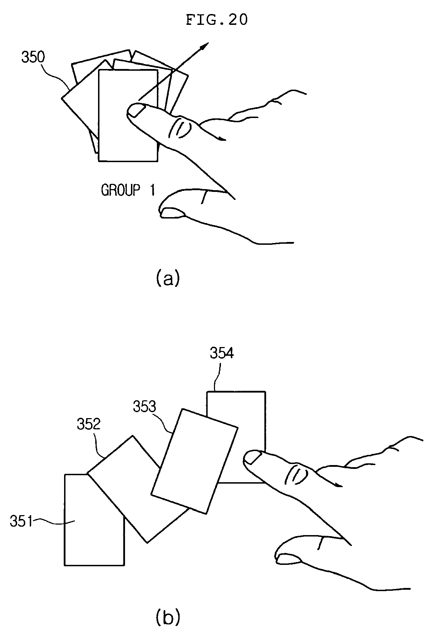

Figs. 20 to 23 illustrate examples of a method that manages a content group, respectively.

Referring to Fig. 20, the user may drag a group object 350, which is created as in the above description, in a specific direction, and thus, a display location of a corresponding group object 350 may move.

For example, as illustrated in a portion (a) of Fig. 20, the user touches an index finger to a first point inside a group object 350 indicating a group 1 to select a corresponding object.

Subsequently, when the user drags the group object 350 by moving the index finger touched to the first point in a right direction, as illustrated in a portion (b) of Fig. 19, files or contents included in the group object 350 may be displayed while being spread on the screen 300.

Accordingly, while the group object 350 is being moved, the user can briefly check details of files or contents included in the group object 350.

However, when the user stops the drag of the group object 350, the files or contents included in the group object 350 may be again gathered, and therefore the group object 350 may be displayed in a location where the drag is stopped.

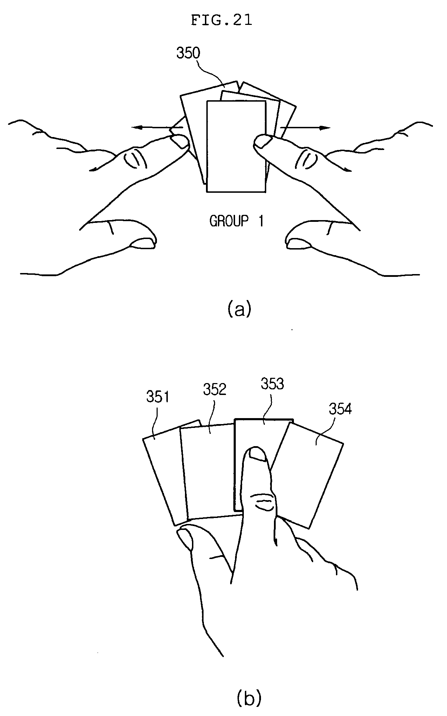

Referring to Fig. 21, the user may select and enlarge two points inside the group object 350 to check details of files or contents included in a corresponding group object 350.

For example, as illustrated in a portion (a) of Fig. 21, the user may respectively touch fingers of both hands to the first and second points inside the group object 350 indicating the group 1, and then enlarge the group object 350 by moving the two fingers in opposite directions such that a distance between the two fingers becomes larger.

Accordingly, as illustrated in a portion (b) of Fig. 21, when the user stops the drag of the group object 350, the files or contents included in the group object 350 may be spread on a screen 300, thereby enabling the preview of the files or contents.

The files or contents included in the group object 350 may be spread as corresponding icons according to a location and direction where the two touched fingers move, and one icon 353 of the spread icons 351 to 354 may be selected by the user.

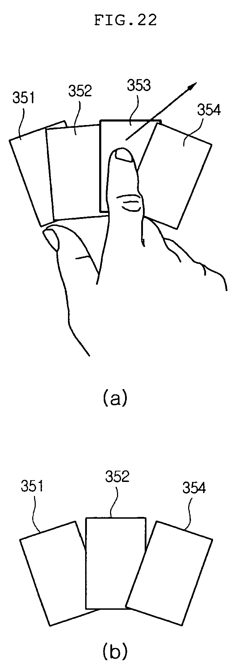

Referring to Fig. 22, as described above, a selected file or content may be excluded from a corresponding group by a user input.

For example, as illustrated in a portion (a) of Fig. 22, in a state where icons respectively corresponding to the files or contents included in the group object 350 have been spread on a screen 300, when the user selects one content icon 353 to move the selected content icon 353 to outside the group object 350 with a finger, a corresponding content may be excluded from a group 1.

Therefore, as illustrated in a portion (b) of Fig. 22, only contents other than content corresponding to the content icon 353 are included in the group object 350 indicating the group 1.

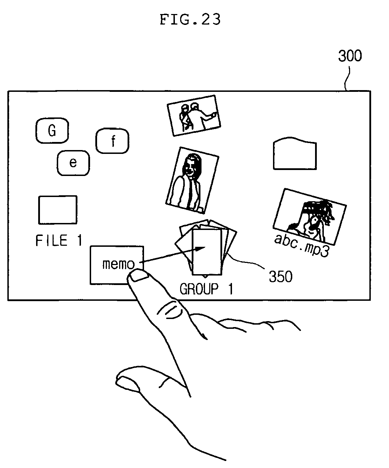

Referring to Fig. 23, the user may add a specific object, displayed on a screen 300, to a group that has been created before.

For example, the user may touch an index finger to a first point inside a memo object 333 displayed on a screen 300 to select the memo object 333, and thereafter the user may drag the memo object 333 by moving the touched index finger toward a location where a group object 350 indicating a group 1 is displayed.

Subsequently, when the user drops the dragged memo object 333 into a region where the group object 350 is displayed, memo content indicated by the memo object 333 may be added to the group 1.

According to another example the user may enlarge an object displayed on a screen 300 to check details included in a corresponding object.

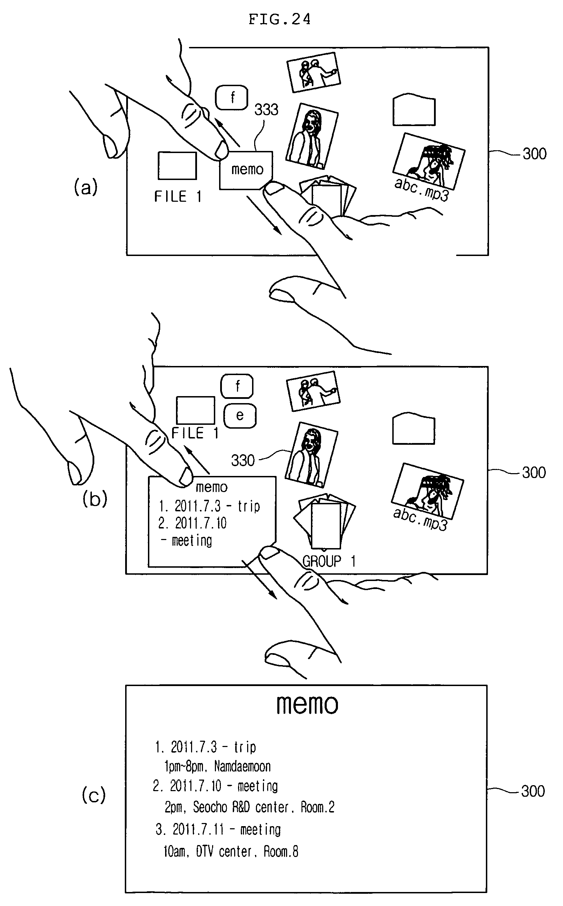

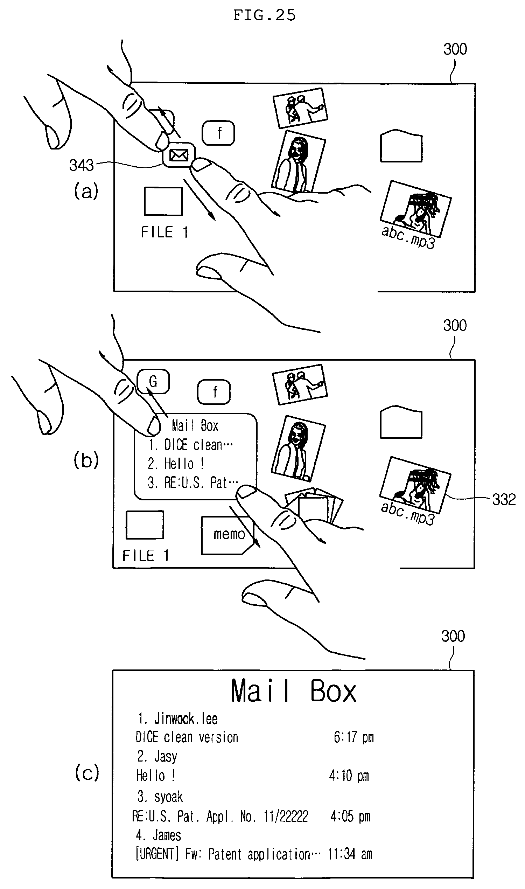

Figs. 24 and 25 illustrate examples of a method which enlarges an object to perform a preview.

Referring to Fig. 24, a user may select two points inside a memo object 333 displayed on a screen 300 to enlarge the memo object 333, and thus allow a preview to be performed for content included in the memo object 333.

For example, as illustrated in a portion (a) of Fig. 24, the user may respectively touch two fingers of both hands to first and second points inside the memo object 333, and then enlarge the memo object 350 by moving the two touched fingers in opposite directions such that a distance between the first and second points is increased.

Therefore, as illustrated in a portion (b) of Fig. 24, as the interval between the touched first and second points increases, the memo object 333 is enlarged to a size corresponding to the increase in the interval, details of memos included in a corresponding memo object 333 inside the enlarged memo object 333 may be displayed through preview.

For example, details of the previewed memo may be adjusted to correspond to the size of the memo object 333, and more particularly, as the size of the enlarged memo object 333 increases, the number of previewed memos may increase or more details of a corresponding memo may be displayed.

A written date and title of each of memos included in the memo object 333 may be briefly displayed inside the enlarged memo object 333, and the user may check the written date and title and then select a specific memo, thereby allowing all details of the memo to be displayed on the screen 300.

Moreover, as illustrated in a portion (c) of Fig. 24, when the user enlarges the size of the memo object 333 to a predetermined size or greater, the memo object 333 may be displayed on the entirety of the screen 300.

Referring to Fig. 25, the user may select two points inside a mail object 343 displayed on a screen 300 to enlarge the memo object 343 with fingers, and thus check summary of each of mails included in the mail object 343.

As illustrated in a portion (a) of Fig. 25, the user may respectively touch two fingers of both hands to first and second points inside the mail object 343, and then enlarge the mail object 343 by moving the two touched fingers in opposite directions in order for an interval between the first and second points to increase.

Therefore, as illustrated in a portion (b) of Fig. 25, as the interval between the touched first and second points increases, the mail object 343 is enlarged to a size corresponding to the increase in the interval, details of mails sent/received to/from inside the enlarged mail object 343 may be displayed through preview.

Moreover, as illustrated in a portion (c) of Fig. 25, when the user selects one of the previewed mails or enlarges the size of the mail object 343 to a predetermined size or greater, the mail object 343 may be displayed on the entirety of the screen 300.

In the above description, a case where the user enlarges the memo object 333 and the mail object 343 to preview details of corresponding content has been described above with reference to Figs. 24 and 25 as an example. As an object is enlarged, details of content displayed in the object may differ according to an attribute of a corresponding object.

For example, when a file object 310 displayed on the screen 300 or content objects 330 to 332 respectively indicating a photograph, a moving image, and music is/are enlarged by the above-described method, a corresponding object is enlarged from an icon type, displayed as a thumbnail image, to a widget type enabling preview, and a corresponding file or content may be executed, thus automatically replaying a moving image or music.

Moreover, when the number of files or contents updated into application objects 340 to 342 displayed on the screen 30 may be displayed and a corresponding object is enlarged for preview, a headline message indicating the updated details may be listed and displayed inside the enlarged object.

Furthermore, when a folder object 320 displayed on the screen 300 is enlarged, names of files included in the folder object 320 may be listed and displayed inside the enlarged object.

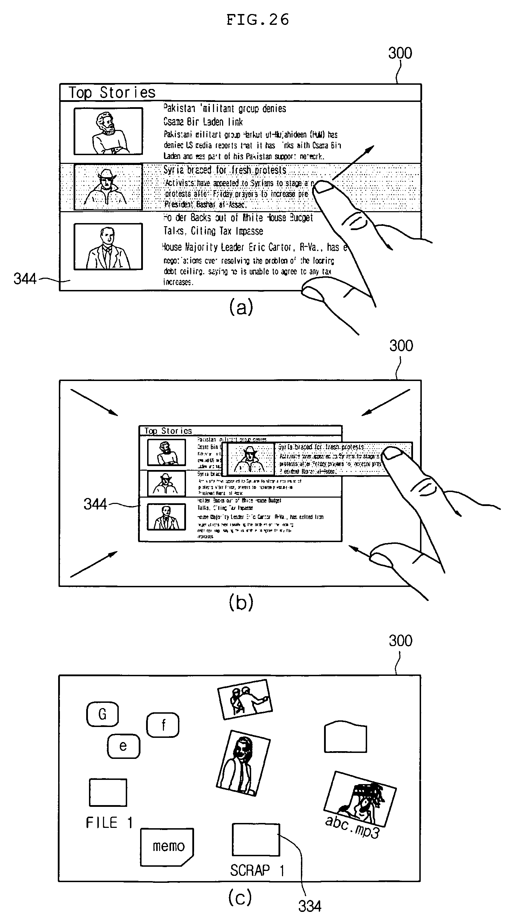

Fig. 26 illustrates a method that separates and creates a portion of an object into discrete content.

Referring to Fig. 26, the user may select a portion of an object displayed on a screen 300 with a finger, and then move the selected portion to the outside to create the selected portion as a discrete file or content.

For example, as illustrated in a portion (a) of Fig. 26, the user may select corresponding content by touching a finger to a region where specific content of a news object 344 displayed on the screen 300 is displayed, and then move the selected content in a specific direction in a state where the finger is touched.

Therefore, as illustrated in a portion (b) of Fig. 26, as the size of the news object 344 displayed on the screen 300 is reduced, an image corresponding to the selected specific content may be dragged to correspond to the movement of the finger and moved to outside the news object 344 that is reduced and displayed.

Subsequently, when the user drops the dragged image into an arbitrary location outside the news object 344, as illustrated in Fig. 26, specific content selected from among the news object 344 may be created as discrete content, the created content may be displayed as a scrap object 334 indicating a scrap 1, on the screen 300.

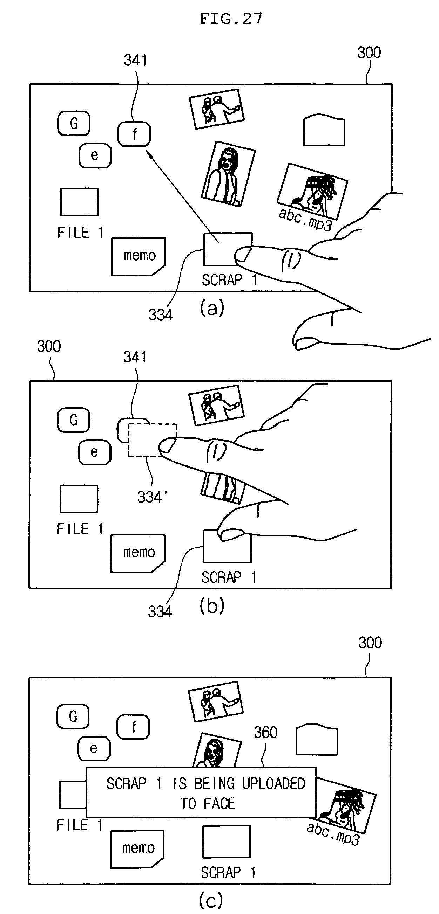

Referring to Fig. 27, the user may drag the scrap object 334 which is created as in the above description and then drop the scrap object 334 into a region where a specific application object is displayed, thereby allowing a function provided by the dropped application object to be performed for the scrap object 334.

For example, as illustrated in a portion (a) of Fig. 27, the user may touch an index finger to the scrap object 334 indicating the scrap 1, and thereafter move the touched index finger to drag the scrap object 334 toward an object "face" 341 providing SNS service.

Subsequently, as illustrated in a portion (b) of Fig. 27, when the user drops the dragged scrap object 334 into a region where the object "face" 341 is displayed, the content "scrap 1" may be transmitted to an SNS server through an application "face" and uploaded.

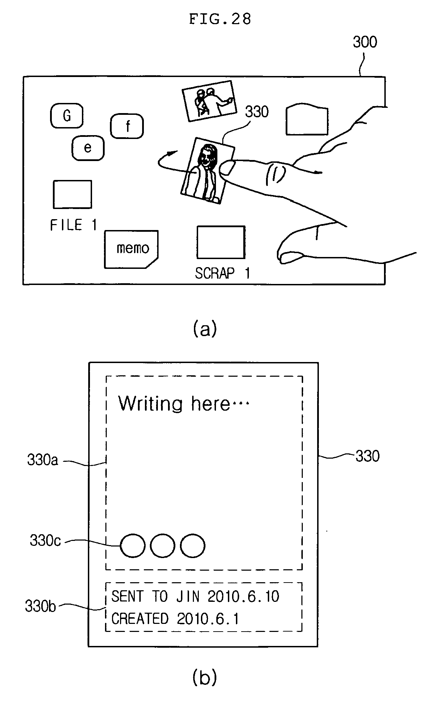

Fig. 28 illustrates a method that inputs characters to an object displayed on a screen.

Referring to Fig. 28, the user may flick an object 300, displayed on a screen 300, to input characters to the object 330.

For example, as illustrated in a portion (a) of Fig. 28, the user may touch an index finger to a photograph object 330 displayed on the screen 300, and then make a flicking motion that flicks the touched finger to input characters intended to write in the photograph object 330.

Referring to a portion (b) of Fig. 28, the photograph object 330 may be overturned by the above-described flicking motion and a rear surface thereof may be displayed. The rear surface of the photograph object 330 may include a first region 330a that enables the user to input desired characters, and a second region 330b that displays history information regarding a corresponding object.

The user may input characters for recording in association with the photograph object 330 to the first region 330a in various input schemes such as a writing recognition scheme, a keyboard input scheme, and a sound recognition scheme. Information regarding the usable input schemes may be determined by icons 330c displayed inside the first region 330a.

The user may input characters to the photograph object 330 in the above-described methods, and then when the user again makes a motion that flicks the photograph object 330, the photograph object 330 may be again overturned and a front surface thereof may be displayed on the screen 300.

Moreover, when the user intends to check information regarding the photograph object 330, the user may flick the photograph object 330 displayed on the screen 300, thereby allowing the input characters to be displayed.

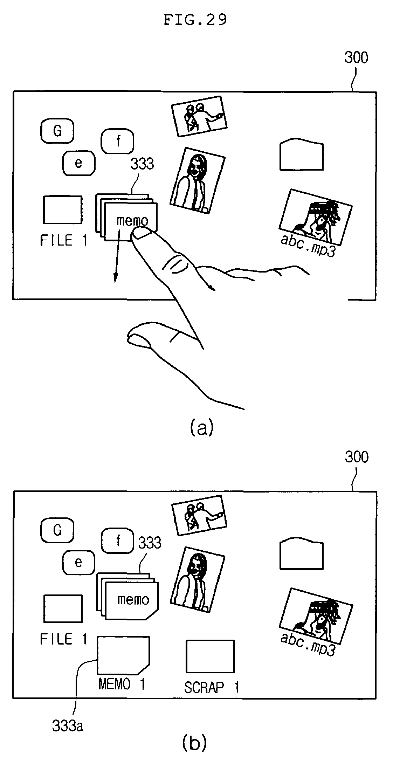

Fig. 29 illustrates - a method that creates an object enabling the input of a memo.

Referring to Fig. 29, in a state where the user has touched a finger to a memo object 333 displayed on a screen 300 to select the memo object 333, when the user moves the touched finger in a specific direction as in detaching a paper, a discrete memo object 333a enabling the input of a memo may be created and displayed on the screen 300.

In this case, when the user selects the created memo object 333a, the memo object "memo 1" 333a may be enlarged on the screen 300 and then put in a state enabling the input of a memo by the user.

When the user touches a finger to an arbitrary point outside the memo object 333a, the input of characters is ended, and details of the memo inputted to the memo object 333a may be displayed.

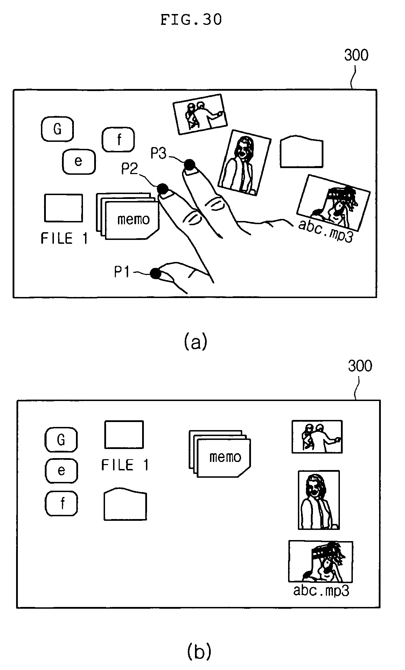

Fig. 30 illustrates a method that aligns objects displayed on a screen.

Referring to Fig. 30, when the user simultaneously, continuously touches first to third points P1 to P3 displayed on a screen 300 two times with three fingers (i.e., double tab), a plurality of objects displayed on the screen 300 may be automatically aligned.

For example, the objects displayed on the screen 300 may be aligned based on a name, size, form, or created/corrected time of each object by the double tap operation using the three fingers.

The method of controlling the operation of the display device, according to the above-described implementations, may be manufactured as programs executable in computers and be stored in a computer readable recording medium. Examples of the computer readable recording medium include read-only memory (ROM), random-access memory (RAM), CD-ROMs, magnetic tapes, floppy disks, optical data storage devices, and carrier waves (such as data transmission through the Internet).

The computer readable recording medium can be distributed over network coupled computer systems so that the computer readable code is stored and executed in a distributed fashion. Also, functional programs, codes, and code segments for accomplishing the present invention can be easily construed by programmers skilled in the art to which the present invention pertains.

By enabling a user to easily select a menu item to be executed for an object displayed on the screen of the display device through one connection motion using two fingers, the operation of the display device can be efficiently controlled. Although various implementations have been described, it should be understood that numerous other modifications and implementations can be devised by those skilled in the art that will fall within the scope of the invention as defined in the claims.

More particularly, various variations and modifications are possible in the component parts and/or arrangements of the subject combination arrangement within the scope of the appended claims.

## Claims

1. A method of controlling an operation of a display device according to a user input, the method comprising:
receiving first user input that touches and selects a first point (P1) on a display of a display device (180), wherein the display (180) is configured as a touchscreen;
determining (S200) that the first point is inside of an object (O) displayed on the display of the display device such that the object is selected;
based on the determination that the first point is inside of the object displayed on the display of the display device, identifying a plurality of selectable menu items (401-403, 410-413, 420-424, 430-432,480-482) that correspond to the object;
controlling display (S210), on the display of the display device, of the plurality of selectable menu items adjacent to the object;
while the first point remains touched and selected, receiving (S220) second user input that
touches and selects a second point (P2) on the display of the display device, the second point being outside of the object and outside of any of the plurality of displayed menu items;
when the second point outside the object is touched (S230) in a state where the first point inside the object is touched, determining that a first menu item of the plurality of displayed menu items is positioned along a line between the first point and the second point; and
executing (S240) the first menu item based on the determination that the first menu item is positioned between the first point and the second point.

2. The method according to claim 1, wherein the object indicates any one of content, a file, a content group, a file group, a folder, and an application that are accessible in the display device.

3. The method according to claim 1, further comprising:
determining an attribute of the object;
determining, based on the determined attribute, a variable configuration for the plurality of selectable menu items; and
applying the variable configuration to the plurality of selectable menu items.

4. The method according to claim 1, further comprising:
determining that the first user input that selects the first point is continuously received for a certain time or longer,
wherein controlling display of the plurality of selectable menu items adjacent to the object includes controlling display of the plurality of selectable menu items adjacent to the object based on the determination that the first user input that selects the first point is continuously received for the certain time or longer.

5. The method according to claim 1, wherein:
determining that the first menu item of the plurality of displayed menu items is positioned between the first point and the second point includes selecting the first menu item based on the first menu item being positioned along the line between the first point and the second point, and
executing the first menu item includes executing the selected first menu item.

6. The method according to claim 1, further comprising controlling display, on the display of the display device, of the first menu item such that it is displayed in a different manner than rest of the plurality of displayed menu items based on the determination that the first menu item of the plurality of displayed menu items is positioned between the first point and the second point.

7. The method according to claim 1, wherein:
receiving the first user input that selects the first point on the display of the display device includes receiving the first user input via a first finger of the user; and
receiving the second user input that selects the second point on the display of the display device includes receiving the second user input via a second finger of the user.

8. The method according to claim 1, wherein:
determining that the first menu item of the plurality of displayed menu items is positioned between the first point and the second point includes selecting the first menu item based on the first menu item being positioned along the line between the first point and the second point; and
the method further comprises:
while the first user input that selects the first point continues to be received,
receiving an indication that the second user input has moved to a third point;
selecting a second menu item based on the second menu item being positioned along a line between the first point and the third point; and
executing the second menu item based on the selection of the second menu item.

9. A display device (100) comprising:
a display unit (180) displaying an object (O) on a screen (300), wherein the display unit is configured as a touchscreen;
a user interface (190) configured to receive first user input that touches and selects a first point (P1) on the screen and second user input that touches and selects a second point (P2) on the screen; and
a control unit (160) configured to:
determine that the first point is inside of the object displayed on the screen such that the object is selected;
based on the determination that the first point is inside of the object displayed on the screen, identify a plurality of selectable menu items (401-403, 410-413, 420-424, 430-432,480-482) that correspond to the object;
control display, on the screen of the display device, of the plurality of selectable menu items adjacent to the object;
when the second point outside the object is touched in a state where the first point inside the object is touched, determine that a first menu item of the plurality of displayed menu items is positioned along a line between the first point and the second point, the second point being outside of the object and outside of any of the plurality of displayed menu items; and
execute the first menu item based on the determination that the first menu item is positioned between the first point and the second point.

10. The display device according to claim 9, wherein:
the control unit being configured to determine that the first menu item of the plurality of displayed menu items is positioned between the first point and the second point includes the control unit being configured to select the first menu item based on the first menu item being positioned along the line between the first point and the second point, and
the control unit being configured to execute the first menu item includes the control unit being configured to execute the selected first menu item.

11. The display device according to claim 9, wherein the control unit is configured to control display, on the screen of the display unit, of the first menu item such that it is displayed in a different manner than rest of the plurality of displayed menu items based on the determination that the first menu item of the plurality of displayed menu items is positioned between the first point and the second point.

12. The display device according to claim 9, wherein:
the user interface being configured to receive the first user input that selects the first point on the screen includes the user interface being configured to receive the first user input via a first finger of the user; and
the user interface being configured to receive the second user input that selects the second point on the screen includes the user interface being configured to receive the second user input via a second finger of the user.

13. The display device according to claim 9, wherein:
the control unit being configured to determine that the first menu item of the plurality of displayed menu items is positioned between the first point and the second point includes the control unit being configured to select the first menu item based on the first menu item being positioned along the line between the first point and the second point;
the control unit is configured to receive, while the first user input that selects the first point continues to be received, an indication that the second user input has moved to a third point;
the control unit is configured to select a second menu item based on the second menu item being positioned along a line between the first point and the third point; and
the control unit is configured to execute the second menu item based on the selection of the second menu item.

14. A computer-readable medium storing software comprising instructions executable by one or more computers which, upon such execution, cause the one or more computers to perform operations comprising:
receiving first user input that touches and selects a first point on a display of a display device, wherein the display is configured as a touchscreen;
determining that the first point is inside of an object displayed on the display of the display device such that the object is selected;
based on the determination that the first point is inside of the object displayed on the display of the display device, identifying a plurality of selectable menu items that correspond to the object; controlling display, on the display of the display device, of the plurality of selectable menu items adjacent to the object;
while the first point remains touched, receiving second user input that touches and selects a second point on the display of the display device, the second point being outside of the object and outside of any of the plurality of displayed menu items;
when the second point outside the object is touched in a state where the first point inside the object is touched, determining that a first menu item of the plurality of displayed menu items is positioned along a line between the first point and the second point; and
executing the first menu item based on the determination that the first menu item is positioned between the first point and the second point.

15. The medium according to claim 14, further comprising instructions executable by one or more computers which, upon such execution, cause the one or more computers to perform operations comprising:
determining that the first user input that selects the first point is continuously received for a certain time or longer,
wherein controlling display of the plurality of selectable menu items adjacent to the object includes controlling display of the plurality of selectable menu items adjacent to the object based on the determination that the first user input that selects the first point is continuously received for the certain time or longer.

## Patentansprüche

1. Verfahren zum Steuern eines Betriebs eines Anzeigegeräts gemäß einer Benutzereingabe, wobei das Verfahren umfasst:
Empfangen einer ersten Benutzereingabe, die einen ersten Punkt (P1) auf einer Anzeige eines Anzeigegeräts (180) berührt und auswählt, wobei die Anzeige (180) als ein Touchscreen eingerichtet ist;
Ermitteln (S200), dass der erste Punkt innerhalb eines Objekts (O), das auf der Anzeige des Anzeigegeräts angezeigt wird, liegt, sodass das Objekt ausgewählt wird;
basierend auf dem Ermitteln, dass der erste Punkt innerhalb des Objekts, das auf der Anzeige des Anzeigegeräts angezeigt wird, liegt, Identifizieren einer Vielzahl von auswählbaren Menüelementen (401-403, 410-413, 420-424, 430-432, 480-482), die dem Objekt entsprechen;
Steuern eines Anzeigens (S210) der Vielzahl der auswählbaren Menüelemente neben dem Objekt auf der Anzeige des Anzeigegeräts;
während der erste Punkt berührt und ausgewählt bleibt, Empfangen (S220) einer zweiten Benutzereingabe, die einen zweiten Punkt (P2) auf der Anzeige des Anzeigegeräts berührt und auswählt, wobei der zweite Punkt außerhalb des Objekts und außerhalb irgendeines der Vielzahl von angezeigten Menüelementen liegt;
wenn der zweite Punkt außerhalb des Objekts berührt wird (S230), in einem Zustand, in dem der erste Punkt innerhalb des Objekts berührt wird, Ermitteln, dass ein erstes Menüelement aus der Vielzahl von angezeigten Menüelementen entlang einer Linie zwischen dem ersten Punkt und dem zweiten Punkt positioniert ist; und
Ausführen (S240) des ersten Menüelements basierend auf der Ermittlung, dass das erste Menüelement zwischen dem ersten Punkt und dem zweiten Punkt positioniert ist.

2. Verfahren gemäß Anspruch 1, bei dem das Objekt einen Inhalt, eine Datei, eine Inhaltsgruppe, eine Dateigruppe, einen Ordner und/oder eine Anwendung, auf die in dem Anzeigegerät zugegriffen werden kann, angibt.

3. Verfahren gemäß Anspruch 1, des Weiteren umfassend:
Ermitteln eines Attributs des Objekts;
Ermitteln, basierend auf dem ermittelten Attribut, einer Variablenkonfiguration für die Vielzahl von auswählbaren Menüelementen; und
Anwenden der Variablenkonfiguration auf die Vielzahl von auswählbaren Menüelementen.

4. Verfahren gemäß Anspruch 1, des Weiteren umfassend:
Ermitteln, dass die erste Benutzereingabe, die den ersten Punkt auswählt, kontinuierlich für eine bestimmte Zeit oder länger empfangen wird,
wobei das Steuern eines Anzeigens der Vielzahl von auswählbaren Menüelementen neben dem Objekt ein Steuern eines Anzeigens der Vielzahl von auswählbaren Menüelementen neben dem Objekt basierend auf dem Ermitteln, dass die erste Benutzereingabe, die den ersten Punkt auswählt, kontinuierlich für die bestimmte Zeit oder länger empfangen wird, umfasst.

5. Verfahren gemäß Anspruch 1, bei dem:
das Ermitteln, dass das erste Menüelement aus der Vielzahl von angezeigten Menüelementen zwischen dem ersten Punkt und dem zweiten Punkt positioniert ist, ein Auswählen des ersten Menüelements basierend auf dem ersten Menüelement, das entlang der Linie zwischen dem ersten Punkt und dem zweiten Punkt positioniert ist, umfasst, und
das Ausführen des ersten Menüelements ein Ausführen des ausgewählten ersten Menüelements umfasst.

6. Verfahren gemäß Anspruch 1, des Weiteren umfassend:
Steuern eines Anzeigens, auf der Anzeige des Anzeigegerät, des ersten Menüelements, sodass es in einer anderen Art und Weise als der Rest der Vielzahl von angezeigten Menüelementen basierend auf dem Ermitteln, dass das erste Menüelement der Vielzahl von Menüelementen zwischen dem ersten Punkt und dem zweiten Punkt positioniert ist, angezeigt wird.

7. Verfahren gemäß Anspruch 1, bei dem:
das Empfangen der ersten Benutzereingabe, die den ersten Punkt auf der Anzeige des Anzeigegerät auswählt, ein Empfangen der ersten Benutzereingabe über einen ersten Finger des Benutzers umfasst; und
das Empfangen der zweiten Benutzereingabe, die den zweiten Punkt auf der Anzeige des Anzeigegeräts auswählt, ein Empfangen der zweiten Benutzereingabe über einen zweiten Finger des Benutzers umfasst.

8. Verfahren gemäß Anspruch 1, bei dem:
das Ermitteln, dass das erste Menüelement aus der Vielzahl von angezeigten Menüelementen zwischen dem ersten Punkt und dem zweiten Punkt positioniert ist,
ein Auswählen des ersten Menüelements darauf basierend, dass das erste Menüelement entlang der Linie zwischen dem ersten Punkt und dem zweiten Punkt positioniert ist, umfasst; und
das Verfahren des Weiteren umfasst:
während die erste Benutzereingabe, die den ersten Punkt auswählt, weiterhin empfangen wird, Empfangen einer Indikation, dass die zweite Benutzereingabe zu einem dritten Punkt bewegt wurde;
Auswählen eines zweiten Menüelements basierend auf dem zweiten Menüelement, das entlang einer Linie zwischen dem ersten Punkt und dem dritten Punkt positioniert ist; und
Ausführen des zweiten Menüelements basierend auf der Auswahl des zweiten Menüelements.

9. Anzeigegerät (100) umfassend:
eine Anzeigeeinheit (180), die ein Objekt (O) auf einem Bildschirm (300) anzeigt, wobei die Anzeigeeinheit als ein Touchscreen eingerichtet ist;
eine Benutzerschnittstelle (190), die dazu eingerichtet ist, eine erste Benutzereingabe, die einen ersten Punkt (P1) auf dem Bildschirm berührt und auswählt, und eine zweite Benutzereingabe, die einen zweiten Punkt (P2) auf dem Bildschirm berührt und auswählt, zu empfangen; und
eine Steuerungseinheit (160), die eingerichtet ist zum:
Ermitteln, dass der erste Punkt innerhalb des Objekts, das auf dem Bildschirm angezeigt wird, liegt, sodass das Objekt ausgewählt wird;
basierend auf dem Ermitteln, dass der erste Punkt innerhalb des Objekts, das auf dem Bildschirm angezeigt wird, liegt, Identifizieren einer Vielzahl von auswählbaren Menüelementen (401-403, 410-413, 420-424, 430-432, 480-482), die dem Objekt entsprechen;
Steuern eines Anzeigens der Vielzahl von auswählbaren Menüelementen neben dem Objekt auf dem Bildschirm des Anzeigegeräts;
wenn der zweite Punkt außerhalb des Objekts berührt wird, in einem Zustand, in dem der erste Punkt innerhalb des Objekts berührt wird, Ermitteln, dass ein erstes Menüelement aus der Vielzahl von angezeigten Menüelementen entlang einer Linie zwischen dem ersten Punkt und dem zweiten Punkt positioniert ist, wobei der zweite Punkt außerhalb des Objekts und außerhalb irgendeines der Vielzahl von angezeigten Menüelementen liegt; und
Ausführen des ersten Menüelements basierend auf dem Ermitteln, dass das erste Menüelement zwischen dem ersten Punkt und dem zweiten Punkt positioniert ist.

10. Anzeigegerät gemäß Anspruch 9, bei dem:
dass die Steuerungseinheit eingerichtet ist zum Ermitteln, dass das erste Menüelement aus der Vielzahl von angezeigten Menüelementen zwischen dem ersten Punkt und dem zweiten Punkt positioniert ist, einschließt, dass die Steuerungseinheit eingerichtet ist zum Auswählen des ersten Menüelements darauf basierend, dass das erste Menüelement entlang der Linie zwischen dem ersten Punkt und dem zweiten Punkt positioniert ist, und
dass die Steuerungseinheit eingerichtet ist zum Ausführen des ersten Menüelements einschließt, dass die Steuerungseinheit eingerichtet ist zum Ausführen des ausgewählten ersten Menüelements.

11. Anzeigegerät gemäß Anspruch 9, bei dem:
die Steuerungseinheit eingerichtet ist zum Steuern eines Anzeigens, auf dem Bildschirm der Anzeigeeinheit, des ersten Menüelements, so dass es in einer anderen Art und Weise als der Rest der Vielzahl von angezeigten Menüelementen basierend auf dem Ermitteln, dass das erste Menüelement der Vielzahl von Menüelementen zwischen dem ersten Punkt und dem zweiten Punkt positioniert ist, angezeigt wird.

12. Anzeigegerät gemäß Anspruch 9, bei dem:
dass die Benutzerschnittstelle eingerichtet ist zum Empfangen der ersten Benutzereingabe, die den ersten Punkt auf dem Bildschirm auswählt, einschließt, dass die Benutzerschnittstelle eingerichtet ist zum Empfangen der ersten Benutzereingabe über einen ersten Finger des Benutzers; und
dass die Benutzerschnittstelle eingerichtet ist zum Empfangen der zweiten Benutzereingabe, die den zweiten Punkt auf dem Bildschirm auswählt, einschließt, dass die Benutzerschnittstelle eingerichtet ist zum Empfangen der zweiten Benutzereingabe über einen zweiten Finger des Benutzers.

13. Anzeigegerät gemäß Anspruch 9, bei dem:
dass die Steuerungseinheit eingerichtet ist zum Ermitteln, dass das erste Menüelement aus der Vielzahl von angezeigten Menüelementen zwischen dem ersten Punkt und den zweiten Punkt positioniert ist, einschließt, dass die Steuerungseinheit eingerichtet ist zum Auswählen des ersten Menüelements darauf basierend, dass das erste Menüelement entlang der Linie zwischen dem ersten Punkt und dem zweiten Punkt positioniert ist; und
die Steuerungseinheit eingerichtet ist zum Empfangen, während die erste Benutzereingabe, die den ersten Punkt auswählt, weiterhin empfangen wird, einer Indikation, dass die zweite Benutzereingabe zu einem dritten Punkt bewegt wurde;
die Steuerungseinheit eingerichtet ist zum Auswählen eines zweiten Menüelements basierend auf dem zweiten Menüelement, das entlang einer Linie zwischen dem ersten Punkt und dem dritten Punkt positioniert ist; und
die Steuerungseinheit eingerichtet ist zum Ausführen des zweiten Menüelements basierend auf der Auswahl des zweiten Menüelements.

14. Computer-lesbares Medium zum Speichern von Software, die Instruktionen umfasst, die durch einen oder mehrere Computer ausführbar sind, wobei sie bei solch einem Ausführen den einen oder die mehreren Computer veranlassen, Funktionen durchzuführen, die umfassen:
Empfangen einer ersten Benutzereingabe, die einen ersten Punkt auf einer Anzeige eines Anzeigegeräts berührt und auswählt, wobei die Anzeige als ein Touchscreen eingerichtet ist;
Ermitteln, dass der erste Punkt innerhalb eines Objekts, das auf der Anzeige des Anzeigegeräts angezeigt wird, liegt, sodass das Objekt ausgewählt wird;
basierend auf dem Ermitteln, dass der erste Punkt innerhalb des Objekts, das auf der Anzeige des Anzeigegeräts angezeigt wird, liegt, Identifizieren einer Vielzahl von auswählbaren Menüelementen, die dem Objekt entsprechen;
Steuern eines Anzeigens der Vielzahl der auswählbaren Menüelemente neben dem Objekt auf der Anzeige des Anzeigegeräts;
während der erste Punkt berührt bleibt, Empfangen einer zweiten Benutzereingabe, die einen zweiten Punkt auf der Anzeige des Anzeigegeräts berührt und auswählt, wobei der zweite Punkt außerhalb des Objekts und außerhalb irgendeines der Vielzahl von angezeigten Menüelementen liegt;
wenn der zweite Punkt außerhalb des Objekts berührt wird, in einem Zustand, in dem der erste Punkt innerhalb des Objekts berührt wird, Ermitteln, dass ein erstes Menüelement aus der Vielzahl von angezeigten Menüelementen entlang einer Linie zwischen dem ersten Punkt und dem zweiten Punkt positioniert ist; und
Ausführen des ersten Menüelements basierend auf der Ermittlung, dass das erste Menüelement zwischen dem ersten Punkt und dem zweiten Punkt positioniert ist.

15. Computer-lesbares Medium gemäß Anspruch 14, des Weiteren Instruktionen umfassend, die durch einen oder mehrere Computer ausführbar sind, wobei sie bei solch einem Ausführen den einen oder die mehreren Computer veranlassen, Funktionen durchzuführen, die umfassen:
Ermitteln, dass die erste Benutzereingabe, die den ersten Punkt auswählt, kontinuierlich für eine bestimmte Zeit oder länger empfangen wird,
wobei das Steuern eines Anzeigens der Vielzahl von auswählbaren Menüelementen neben dem Objekt ein Steuern eines Anzeigens der Vielzahl von auswählbaren Menüelementen neben dem Objekt basierend auf dem Ermitteln, dass die erste Benutzereingabe, die den ersten Punkt auswählt, kontinuierlich für die bestimmte Zeit oder länger empfangen wird, umfasst.

## Revendications

1. Procédé de commande d'un fonctionnement d'un dispositif d'affichage selon une entrée d'utilisateur, le procédé comprenant :
la réception d'une première entrée d'utilisateur qui touche et sélectionne un premier point (P1) sur un afficheur d'un dispositif d'affichage (180), dans lequel l'afficheur (180) est configuré comme un écran tactile ;
la détermination (S200) que le premier point est à l'intérieur d'un objet (O) affiché sur l'afficheur du dispositif d'affichage de telle sorte que l'objet est sélectionné ;
sur la base de la détermination que le premier point est à l'intérieur de l'objet affiché sur l'afficheur du dispositif d'affichage, l'identification d'une pluralité d'items de menu sélectionnables (401-403, 410-413, 420-424, 430-432, 480-482) qui correspondent à l'objet ;
la commande de l'affichage (S210), sur l'afficheur du dispositif d'affichage, de la pluralité d'items de menu sélectionnables adjacents à l'objet ;
tandis que le premier point reste touché et sélectionné, la réception (S220) d'une deuxième entrée d'utilisateur qui touche et sélectionne un deuxième point (P2) sur l'afficheur du dispositif d'affichage, le deuxième point étant à l'extérieur de l'objet et à l'extérieur d'un quelconque de la pluralité d'items de menu affichés ;
lorsque le deuxième point à l'extérieur de l'objet est touché (S230) dans un état où le premier point à l'intérieur de l'objet est touché, la détermination qu'un premier item de menu de la pluralité d'items de menu affichés est positionné le long d'une ligne entre le premier point et le deuxième point ; et
l'exécution (S240) du premier item de menu sur la base de la détermination que le premier item de menu est positionné entre le premier point et le deuxième point.

2. Procédé selon la revendication 1, dans lequel l'objet indique l'un quelconque parmi un contenu, un fichier, un groupe de contenus, un groupe de fichiers, un dossier, et une application qui sont accessibles dans le dispositif d'affichage.

3. Procédé selon la revendication 1, comprenant en outre :
la détermination d'un attribut de l'objet ;
la détermination, sur la base de l'attribut déterminé, d'une configuration variable pour la pluralité d'items de menu sélectionnables ; et
l'application de la configuration variable à la pluralité d'items de menu sélectionnables.

4. Procédé selon la revendication 1, comprenant en outre :
la détermination que la première entrée d'utilisateur qui sélectionne le premier point est reçue de façon continue pendant un certain temps ou plus,
dans lequel la commande de l'affichage de la pluralité d'items de menu sélectionnables adjacents à l'objet inclut la commande de l'affichage de la pluralité d'items de menu sélectionnables adjacents à l'objet sur la base de la détermination que la première entrée d'utilisateur qui sélectionne le premier point est reçue de façon continue pendant le certain temps ou plus.

5. Procédé selon la revendication 1, dans lequel :
la détermination que le premier item de menu de la pluralité d'items de menu affichés est positionné entre le premier point et le deuxième point inclut la sélection du premier item de menu sur la base du premier item de menu étant positionné le long de la ligne entre le premier point et le deuxième point, et
l'exécution du premier item de menu inclut l'exécution du premier item de menu sélectionné.

6. Procédé selon la revendication 1, comprenant en outre la commande de l'affichage, sur l'afficheur du dispositif d'affichage, du premier item de menu de telle manière qu'il est affiché d'une manière différente du reste de la pluralité d'items de menu affichés sur la base de la détermination que le premier item de menu de la pluralité d'items de menu affichés est positionné entre le premier point et le deuxième point.

7. Procédé selon la revendication 1, dans lequel :
la réception de la première entrée d'utilisateur qui sélectionne le premier point sur l'afficheur du dispositif d'affichage inclut la réception de la première entrée d'utilisateur par l'intermédiaire d'un premier doigt de l'utilisateur ; et
la réception de la deuxième entrée d'utilisateur qui sélectionne le deuxième point sur l'afficheur du dispositif d'affichage inclut la réception de la deuxième entrée d'utilisateur par l'intermédiaire d'un deuxième doigt de l'utilisateur.

8. Procédé selon la revendication 1, dans lequel :
la détermination que le premier item de menu de la pluralité d'items de menu affichés est positionné entre le premier point et le deuxième point inclut la sélection du premier item de menu sur la base du premier item de menu étant positionné le long de la ligne entre le premier point et le deuxième point ; et
le procédé comprend en outre :
tandis que la première entrée d'utilisateur qui sélectionne le premier point continue d'être reçue,
la réception d'une indication que la deuxième entrée d'utilisateur s'est déplacée jusqu'à un troisième point ;
la sélection d'un deuxième item de menu sur la base du deuxième item de menu étant positionné le long d'une ligne entre le premier point et le troisième point ; et
l'exécution du deuxième item de menu sur la base de la sélection du deuxième item de menu.

9. Dispositif d'affichage (100) comprenant :
une unité d'affichage (180) affichant un objet (O) sur un écran (300), dans lequel l'unité d'affichage est configurée comme un écran tactile ;
une interface utilisateur (190) configurée pour recevoir une première entrée d'utilisateur qui touche et sélectionne un premier point (P1) sur l'écran et une deuxième entrée d'utilisateur qui touche et sélectionne un deuxième point (P2) sur l'écran ; et
une unité de commande (160) configurée pour :
déterminer que le premier point est à l'intérieur de l'objet affiché sur l'écran de telle sorte que l'objet est sélectionné ;
sur la base de la détermination que le premier point est à l'intérieur de l'objet affiché sur l'écran, identifier une pluralité d'items de menu sélectionnables (401-403, 410-413, 420-424, 430-432, 480-482) qui correspondent à l'objet ;
commander l'affichage, sur l'écran du dispositif d'affichage, de la pluralité d'items de menu sélectionnables adjacents à l'objet ;
lorsque le deuxième point à l'extérieur de l'objet est touché dans un état où le premier point à l'intérieur de l'objet est touché, déterminer qu'un premier item de menu de la pluralité d'items de menu affichés est positionné le long d'une ligne entre le premier point et le deuxième point, le deuxième point étant à l'extérieur de l'objet et à l'extérieur d'un quelconque de la pluralité d'items de menu affichés ; et
exécuter le premier item de menu sur la base de la détermination que le premier item de menu est positionné entre le premier point et le deuxième point.

10. Dispositif d'affichage selon la revendication 9, dans lequel :
l'unité de commande étant configurée pour déterminer que le premier item de menu de la pluralité d'items de menu affichés est positionné entre le premier point et le deuxième point inclut l'unité de commande étant configurée pour sélectionner le premier item de menu sur la base du premier item de menu étant positionné le long de la ligne entre le premier point et le deuxième point, et
l'unité de commande étant configurée pour exécuter le premier item de menu inclut l'unité de commande étant configurée pour exécuter le premier item de menu sélectionné.

11. Dispositif d'affichage selon la revendication 9, dans lequel l'unité de commande est configurée pour commander l'affichage, sur l'écran du dispositif d'affichage, du premier item de menu de telle manière qu'il est affiché d'une manière différente du reste de la pluralité d'items de menu affichés sur la base de la détermination que le premier item de menu de la pluralité d'items de menu affichés est positionné entre le premier point et le deuxième point.

12. Dispositif d'affichage selon la revendication 9, dans lequel :
l'interface utilisateur étant configurée pour recevoir la première entrée d'utilisateur qui sélectionne le premier point sur l'écran inclut l'interface utilisateur étant configurée pour recevoir la première entrée d'utilisateur par l'intermédiaire d'un premier doigt de l'utilisateur ; et
l'interface utilisateur étant configurée pour recevoir la deuxième entrée d'utilisateur qui sélectionne le deuxième point sur l'écran inclut l'interface utilisateur étant configurée pour recevoir la deuxième entrée d'utilisateur par l'intermédiaire d'un deuxième doigt de l'utilisateur.

13. Dispositif d'affichage selon la revendication 9, dans lequel :
l'unité de commande étant configurée pour déterminer que le premier item de menu de la pluralité d'items de menu affichés est positionné entre le premier point et le deuxième point inclut l'unité de commande étant configurée pour sélectionner le premier item de menu sur la base du premier item de menu étant positionné le long de la ligne entre le premier point et le deuxième point ;
l'unité de commande est configurée pour recevoir, tandis que la première entrée d'utilisateur qui sélectionne le premier point continue d'être reçue, une indication que la deuxième entrée d'utilisateur s'est déplacée jusqu'à un troisième point ;
l'unité de commande est configurée pour sélectionner un deuxième item de menu sur la base du deuxième item de menu étant positionné le long d'une ligne entre le premier point et le troisième point ; et
l'unité de commande est configurée pour exécuter le deuxième item de menu sur la base de la sélection du deuxième item de menu.

14. Support lisible par ordinateur stockant un logiciel comprenant des instructions exécutables par un ou plusieurs ordinateur(s) qui, lors d'une telle exécution, font que le ou les ordinateur(s) mettent en oeuvre des opérations comprenant :
la réception d'une première entrée d'utilisateur qui touche et sélectionne un premier point sur un afficheur d'un dispositif d'affichage, dans lequel l'afficheur est configuré comme un écran tactile ;
la détermination que le premier point est à l'intérieur d'un objet affiché sur l'afficheur du dispositif d'affichage de telle sorte que l'objet est sélectionné ;
sur la base de la détermination que le premier point est à l'intérieur de l'objet affiché sur l'afficheur du dispositif d'affichage, l'identification d'une pluralité d'items de menu sélectionnables qui correspondent à l'objet ;
la commande de l'affichage, sur l'afficheur du dispositif d'affichage, de la pluralité d'items de menu sélectionnables adjacents à l'objet ;
tandis que le premier point reste touché, la réception d'une deuxième entrée d'utilisateur qui touche et sélectionne un deuxième point sur l'afficheur du dispositif d'affichage, le deuxième point étant à l'extérieur de l'objet et à l'extérieur d'un quelconque de la pluralité d'items de menu affichés ;
lorsque le deuxième point à l'extérieur de l'objet est touché dans un état où le premier point à l'intérieur de l'objet est touché, la détermination qu'un premier item de menu de la pluralité d'items de menu affichés est positionné le long d'une ligne entre le premier point et le deuxième point ; et
l'exécution du premier item de menu sur la base de la détermination que le premier item de menu est positionné entre le premier point et le deuxième point.

15. Support selon la revendication 14, comprenant en outre des instructions exécutables par un ou plusieurs ordinateur(s) qui, lors d'une telle exécution, font que le ou les ordinateur(s) mettent en oeuvre des opérations comprenant :
la détermination que la première entrée d'utilisateur qui sélectionne le premier point est reçue de façon continue pendant un certain temps ou plus,
dans lequel la commande de l'affichage de la pluralité d'items de menu sélectionnables adjacents à l'objet inclut la commande de l'affichage de la pluralité d'items de menu sélectionnables adjacents à l'objet sur la base de la détermination que la première entrée d'utilisateur qui sélectionne le premier point est reçue de façon continue pendant le certain temps ou plus.
